# EUROPÄISCHE PATENTSCHRIFT

(11) **EP 0 909 917 B1**
(45) Veröffentlichungstag und Bekanntmachung des Hinweises auf die Patenterteilung: **27.07.2005**
(21) Anmeldenummer: 98118742.0
(22) Anmeldetag: 05.10.1998
(51) Int. Cl.: F17C 13/00, F17C 13/12, F17C 13/06

(54) **Gasspeichersystem**
Gas-storage system
Système de stockage de gaz

(30) Priorität: 16.10.1997 DE 19745732
(43) Veröffentlichungstag der Anmeldung: 21.04.1999
(73) Patentinhaber: Bayerische Motoren Werke Aktiengesellschaft, 80788 München (DE)
(72) Erfinder: Stiegler, Ottmar, 82008 Unterhaching (DE)

(56) Entgegenhaltungen:
- GB-A- 2 112 123
- US-A- 4 887 733
- US-A- 5 183 173
- US-A- 5 395 004
- PATENT ABSTRACTS OF JAPAN vol. 018, no. 283 (M-1613), 30. Mai 1994 (1994-05-30) & JP 06 050500 A (TOKAI:KK), 22. Februar 1994 (1994-02-22)

## Beschreibung

Die Erfindung betrifft ein Gasspeichersystem gemäß dem Oberbegriff des Anspruchs 1.

Patent abstract aus Japan JP 06 050 500 beschreibt auch ein Gasspeichesystem, und wird als nächster Stand der Technik angesehen.

Es sind bereits Gasspeichersysteme bekannt, die in einem Kraftfahrzeug angeordnet sind. Ferner ist es bekannt, die Gasspeichersysteme mit einem Gas zu füllen, das unter einem hohen Druck steht und/oder das eine tiefe Temperatur aufweist. Vorzugsweise kann es sich dabei um ein Erdgas, d. h. um ein sogenanntes "compressed natural gas", kurz CNG, handeln. Die bekannten Gasspeichersysteme sind in der Regel quer im Kofferraum eines Kraftfahrzeuges eingebaut.

Aufgabe der Erfindung ist es, ein Gasspeichersystem zu schaffen, das crashsicher ausgebildet ist.

Diese Aufgabe wird durch die Merkmale des Anspruchs 1 gelöst.

Durch die Integration aller sicherheitsrelevanten Bauteile, insbesondere des Abspenventils, in ein Gehäuse, das sich innerhalb der Gasflasche des erfindungsgemäßen Gasspeichersystems befindet, erhöht sich der Crashschutz. Eine weitere Maßnahme zur Sicherung des Gasspeichersystems besteht darin, daß das Gehäuse an einem Deckel angeordnet ist, der mit einer Abstützung oder Abstützelementen versehen sind, die bei einem Crash auf die Außenwand des Gasspeichersystems drücken, so daß das Gehäuse und die darin befindlichen Bauteile geschützt sind. Eine zusätzliche Maßnahme besteht darin, daß eine Crashschutz-Platte mit einem überstehenden Rand auf dem Deckel angeordnet ist. Durch den überstehenden Rand der Crashschutz-Platte werden darunterliegende, am Umfang des Deckels angeordnete Anschlüsse ebenfalls geschützt. Die Befestigung des Gehäuses mit dem Deckel erfolgt vorteilhafterweise dadurch, daß in dem Abschnitt des offenen Endes der Gasflasche ein Innengewinde ausgebildet ist, so daß das Gehäuse in die Gasflasche einschraubbar ist.

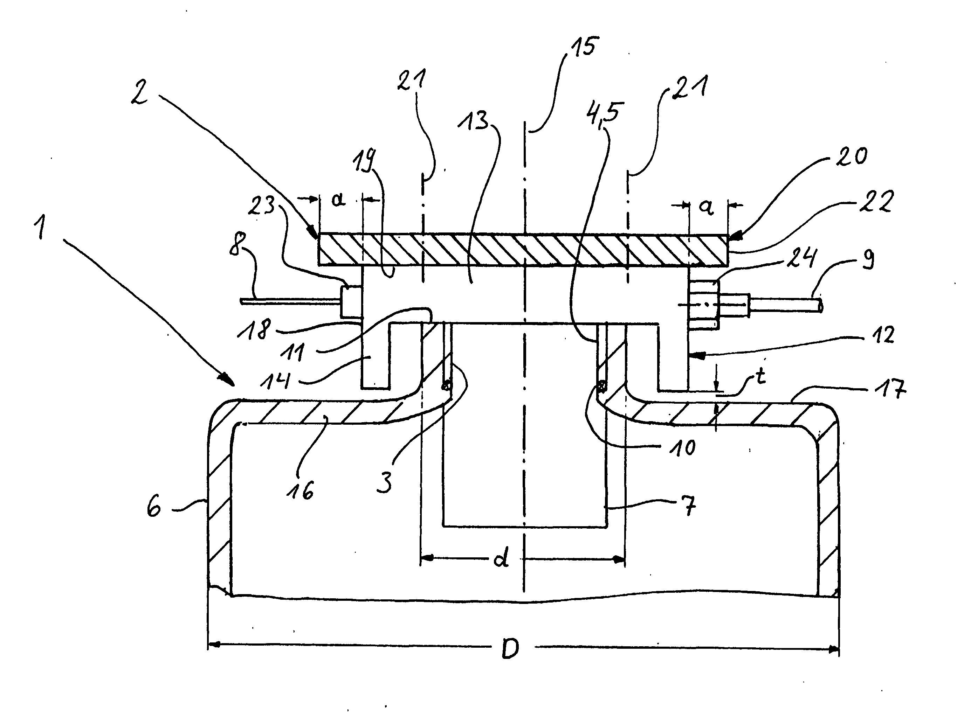

Eine Ausführungsform der Erfindung wird nachstehend beispielshalber anhand einer Zeichnung beschrieben. Die einzige Figur zeigt eine Querschnittsansicht eines oberen Endes 2 einer Gasflasche 1 eines Gasspeichersystems. Das obere Ende 2 weist eine mit einem Innengewinde 3 versehene Öffnung 4 an einem Abschnitt 5 der Gasflasche 1 auf. Der Abschnitt 5 hat einen kleineren Außendurchmesser d als ein darunter befindlicher Abschnitt 6 mit einem Außendurchmesser D. Der Außendurchmesser d liegt dabei in einer Größenordnung von ca. d ≥ 50 mm und der Außendurchmesser D ist ca. D ≥ 160 mm groß.

Auf das Innengewinde 3 des Abschnittes 5 ist ein Gehäuse 7 eingeschraubt, in dem alle sicherheitsrelevanten Bauteile der Gasflasche 1 integriert sind. Zu diesen Bauteilen gehört u. a. ein Absperrventil, das vorzugsweise elektromagnetisch arbeitet und mit einer mechanischen Entriegelung versehen ist. Ferner gehen durch das Gehäuse 7 abgedichtet Leitungen 8 und 9 hindurch. Die gasdichte Abdichtung des Gehäuses 7 erfolgt in der gezeigten Ausführungsform durch eine ringförmige Dichtung 10.

Auf einem Rand 11 der Öffnung 4 ist ein Deckel 12 abgedichtet angeordnet. Der Deckel 12 besteht aus einem plattenförmigen Teil 13. An dem plattenförmigen Teil 13 ist eine Abstützung 14 einstückig ausgebildet, die sich parallel zu einer Längsmittelachse 15 in Richtung zu einem Verbindungsabschnitt 16 der Außenwand der Gasflasche 1 erstreckt, der zwischen dem Abschnitt 5 und dem Abschnitt 6 ausgebildet ist. Die Abstützung 14 kann ein umlaufender Ring oder einzelne voneinander beabstandete Stege sein. In der gezeigten Ausführungsform ist die Abstützung 14 um einen Abstand t ≥ 5 mm von der Außenoberfläche 17 des Verbindungsabschnittes 16 beabstandet. In einer anderen Ausführungsform liegt die Abstützung 14 an der Außenoberfläche 17 der Gasflasche 1 an. Zusätzlich kann zwischen der Außenoberfläche 17 und der daran anliegenden oder dazu beabstandeten Abstützung 14 eine gasdichte Abdichtung ausgebildet sein.

Am Umfang 18 des plattenförmigen Teils 13 sind Bohrungen und/oder Öffnungen für die Leitungen 8, 9 ausgebildet. Auf der Oberseite 19 des plattenförmigen Teils 13 ist eine Crashschutz-Platte 20 beispielsweise über Schrauben 21 befestigt. Die Crashschutz-Platte 20 weist in der Draufsicht eine Sechseckform auf. Ein Rand 22 steht über den Deckel 12 um einen Betrag a so weit über, daß die Anschlüsse 23, 24 der Leitungen 8 und 9 am Umfang 18 des Deckels 12 geschützt sind. Der Überstand a beträgt in der gezeigten Ausführungsform mindestens a ≥ 10 mm.

## Patentansprüche

1. Gasspeichersystem, insbesondere für ein Kraftfahrzeug, das aus einer Gasflasche und Absperrvorrichtungen besteht, die an einem mit einem offenen Ende versehenen Abschnitt der Gasflasche angeordnet sind, wobei das in dem Gasspeichersystem befindliche Gas unter einem hohen Druck steht und/oder eine tiefe Temperatur aufweist, und wobei in dem durch den Abschnitt (5) am offenen Ende (2) der Gasflasche (1) umschlossenen Raum ein Gehäuse (7) angeordnet ist, in dem alle sicherheitsrelevanten Bauteile des Gasspeichersystems integriert sind, daß das Gehäuse (7) an einem Deckel (12) vorgesehen ist, der das offene Ende (2) der Gasflasche (1) dicht verschließt und **dadurch gekennzeichnet, daß** auf der Oberseite (19) des Deckels (12) eine Crashschutz-Platte (20) befestigt ist.

2. Gasspeichersystem nach Anspruch 1,
**dadurch gekennzeichnet, daß** die Crashschutz-Platte (20) mit einem Überstand a ≥ 10 mm größer ist als der darunter befindliche Deckel (12).

3. Gasspeichersystem nach den Ansprüchen 1 oder 2,
**dadurch gekennzeichnet, daß** am Umfang (18) des Deckels (12) die Anschlüsse (23, 24) für Leitungen (8, 9) angeordnet sind.

4. Gasspeichersystem nach einem der vorhergehenden Ansprüche,
**dadurch gekennzeichnet, daß** das Gasspeichersystem mit Flüssiggas gefüllt ist.

5. Gasspeichersystem nach Anspruch 3,
**dadurch gekennzeichnet, daß** sich in dem Gasspeichersystem komprimiertes Erdgas (CNG) befindet.

6. Gasspeichersystem nach einem der vorhergehenden Ansprüche,
**dadurch gekennzeichnet, daß** der Deckel (12) mit einer Abstützung (14) versehen ist, die an der Außenwand (16) der Gasflasche (1) anliegt oder von dieser um einen Abstand t ≥ ca. 5 mm beabstandet ist.

7. Gasspeichersystem nach einem der vorhergehenden Ansprüche,
**dadurch gekennzeichnet, daß** der Abschnitt (5) am offenen Ende (2) der Gasflasche (1) mit einem Innengewinde (3) versehen ist, über das der Deckel (12) mit dem Gehäuse (7) abgedichtet befestigt ist.

8. Gasspeichersystem nach einem der vorhergehenden Ansprüche,
**dadurch gekennzeichnet, daß** zwischen der Abstützung (14) und der Außenoberfläche (17) der Gasflasche (1) eine gasdichte Abdichtung ausgebildet ist.

## Claims

1. A gas storage system, especially for a motor vehicle, comprising a gas cylinder and shut-off devices disposed on an open-ended portion of the gas cylinder, wherein the gas in the gas storage system is at a high pressure and/or a low temperature and wherein a casing (7) is disposed in the space surrounded by the portion (5) at the open end (2) of the gas cylinder (1) and contains all safety components of the gas storage system, the casing (7) is provided on a lid (12) which tightly closes the open end (2) of the gas cylinder (1) and
**characterised in that** a crash-proof plate (20) is fastened to the top (19) of the lid (12).

2. A gas storage system according to claim 1, **characterised in that** the crash-proof plate (20) projects a ≥ 10 mm beyond the lid (12) underneath.

3. A gas storage system according to claim 1 or 2, **characterised in that** connections (23, 24) for pipelines (8, 9) are disposed on the periphery (18) of the lid (12).

4. A gas storage system according to any of the preceding claims, **characterised in that** the gas storage system is filled with liquid gas.

5. A gas storage system according to claim 3, **characterised in that** the gas storage system contains compressed natural gas (CNG).

6. A gas storage system according to any of the preceding claims, **characterised in that** the lid (12) has a support (14) which abuts the outer wall (16) of the gas cylinder (1) or is at a distance t ≥ about 5 mm from it.

7. A gas storage system according to any of the preceding claims, **characterised in that** the portion (5) on the open end (2) of the gas cylinder (1) has an internal screwthread (3) by means of which the lid (12) is sealingly fastened to the casing (7).

8. A gas storage system according to any of the preceding claims, **characterised in that** a gas-tight seal is formed between the support (14) and the outer surface (17) of the gas cylinder (1).

## Revendications

1. Dispositif de stockage de gaz, en particulier pour un véhicule automobile, comprenant une bonbonne de gaz et des dispositifs de fermeture disposés au niveau d'une section de la bonbonne pourvue d'une extrémité ouverte, le gaz présent dans le système de stockage étant sous haute pression et/ou présentant une basse température, et dans l'espace entouré par la section (5) au niveau de l'extrémité ouverte (2) de la bonbonne (1) est disposé un boîtier (7) dans lequel sont intégrés tous les composants importants en termes de sécurité du système de stockage, le boîtier (7) étant prévu au niveau d'un couvercle (12) fermant de façon étanche l'extrémité ouverte (2) de la bonbonne (1),
**caractérisé en ce qu'**
une plaque de protection antichoc (20) est fixée sur la face supérieure (19) du couvercle (12).

2. Dispositif de stockage de gaz selon la revendication 1,
**caractérisé en ce que**
la plaque de protection antichoc (20) surmonte le couvercle (12) situé en dessous d'un dépassement a ≥ 10 mm.

3. Dispositif de stockage de gaz selon la revendication 1 ou 2,
**caractérisé en ce que**
les raccords (23, 24) pour les conduites (8, 9) sont disposés sur la périphérie (18) du couvercle (12).

4. Dispositif de stockage de gaz selon l'une des revendications précédentes,
**caractérisé en ce que**
le système de stockage est rempli de gaz liquide.

5. Dispositif de stockage de gaz selon la revendication 3,
**caractérisé en ce que**
du gaz naturel comprimé (GNC) se trouve dans le système de stockage.

6. Dispositif de stockage de gaz selon l'une des revendications précédentes,
**caractérisé en ce que**
le couvercle (12) est pourvu d'un support (14) qui repose contre la paroi extérieure (16) de la bonbonne (1) ou est écarté de celle-ci d'une distance t ≥ 5 mm environ.

7. Dispositif de stockage de gaz selon l'une des revendications précédentes,
**caractérisé en ce que**
la section (5) est pourvue, au niveau de l'extrémité ouverte (2) de la bonbonne de gaz (1), d'un filetage intérieur (3) par lequel le couvercle (12) est fixé de façon étanche au boîtier (7).

8. Dispositif de stockage de gaz selon l'une des revendications précédentes,
**caractérisé en ce qu'**
entre le support (14) et la surface extérieure (17) de la bonbonne (1) est placé un joint d'étanchéité aux gaz.
